(19) Europäisches Patentamt
European Patent Office
Office européen des brevets

(11) EP 0 695 773 A1

(12) # EUROPÄISCHE PATENTANMELDUNG

(43) Veröffentlichungstag:
**07.02.1996 Patentblatt 1996/06**

(51) Int. Cl.[6]: **C08G 61/12**

(21) Anmeldenummer: **95110214.4**

(22) Anmeldetag: **30.06.1995**

(84) Benannte Vertragsstaaten:
**BE DE FR GB NL**

(30) Priorität: **11.07.1994 DE 4424042**

(71) Anmelder: **BASF AKTIENGESELLSCHAFT
D-67056 Ludwigshafen (DE)**

(72) Erfinder:
- **Heitz, Thomas, Dr.
D-67125 Dannstadt-Schauernheim (DE)**
- **Glück, Alexander, Dr.
D-67098 Bad Dürkheim (DE)**
- **Heitz, Walter, Prof.Dr.
D-35274 Kirchhain (DE)**
- **Richter, Ralf
D-35091 Cölbe (DE)**

(54) **Schwefeloxide und deren Halogenderivate als elektrophiles Endgruppenverschlussreagens bei der elektrophilen Synthese von Polyaryletherketonen**

(57) Verfahren zur Herstellung von Polyaryletherketonen durch elektrophile Polykondensation unter Verwendung von Carbonsäurehalogeniden als Monomerbestandteil in Gegenwart einer Lewis-Säure, wobei die Reaktion unter Druck durchgeführt wird und der Reaktionsmischung ein Oxid des Schwefels und/oder Halogenderivate von Oxiden des Schwefels zugesetzt werden.

EP 0 695 773 A1

## Beschreibung

Die Erfindung betrifft ein Verfahren zur Herstellung von Polyaryletherketonen durch elektrophile Polykondensation unter Verwendung von Carbonsäurehalogeniden als Monomerbestandteil in Gegenwart einer Lewis-Säure.

Polyaryletherketone gehören zur Klasse der hochtemperaturbeständigen Thermoplaste und zeichnen sich neben ihrer Temperaturbeständigkeit durch eine Vielzahl weiterer interessanter Eigenschaften aus, wie z.B. thermoplastische Verarbeitbarkeit, mechanische Stabilität, chemische Resistenz und Beständigkeit gegen übliche Lösungsmittel.

Zur Herstellung von Polyaryletherketonen wurden in der Literatur zwei Synthesewege beschrieben. Bei der nucleophilen Verfahrensweise werden Etherbindungen zwischen gegenüber einer nucleophilen aromatischen Substitution aktivierten Aromaten und Hydroxyaromaten aufgebaut.

Bei der elektrophilen Verfahrensweise werden unter Ausbildung einer Diarylketon-Bindung allgemein aromatische Dicarbonsäurederivate oder Phosgen mit geeigneten aromatischen Verbindungen, welche zwei durch elektrophile Substitution austauschbare Wasserstoffatome enthalten, umgesetzt oder ein aromatisches Carbonsäurederivat, welches sowohl eine Säurederivatgruppe als auch ein substituierbares Wasserstoffatom enthält, mit sich selbst polykondensiert. In den US 34 41 538, US 34 42 857, US 39 53 400, DE-A 32 41 444, DE-A 34 16 445 und DE-A 34 16 446 werden elektrophile Polykondensationsreaktionen beschrieben, in denen HF als Lösungsmittel und $BF_3$als Katalysator verwendet wird. Gemäß der DE-C 2206837 können als Lösungsmittel auch Gemische aus Fluorwasserstoff und Schwefeldioxid unter Verwendung von Bortrifluorid als Katalysator eingesetzt werden, wobei die Verwendung von Schwefeldioxid als inertem Verdünnungsmittel verfahrenstechnische Vorteile bei der Aufarbeitung des Polymer-Katalysator-Komplexes aufweist. Gemäß einer Variante können auch halogenierte Kohlenwasserstoffe als Lösungsmittel in Kombination mit anderen Lewis-Säuren, insbesondere $AlCl_3$, als Katalysator verwendet werden. Es hat sich in diesen Fällen als vorteilhaft erwiesen, die Umsetzung in Gegenwart einer Lewis-Base durchzuführen, um die Aktivität der Lewissäure abzuschwächen und so die Substitution des elektronenreichen Aromaten durch das Säurechlorid selektiv in para-Stellung zu lenken. Unerwünschte Nebenreaktionen mit dem Lösungsmittel oder ortho-Substitutionen des elektronenreichen Aromaten durch das Säurechlorid können so weitgehend unterdrückt werden (WO 84/03 891 und WO 84/03 892). Die Unterdrükkung von Nebenreaktionen, wie z.B. der Alkylierung der Polyetherketone durch das Lösungsmittel oder der ortho-Acylierung aktivierter Aryloxygruppen, führt zu einem Produkt mit für die meisten Anwendungen ausreichendem Molekulargewicht und einer ausreichenden Schmelzestabilität der Polymere und ermöglicht die Verarbeitung der Produkte durch Extrusion oder Spritzguß.

Allen elektrophilen Polykondensationsverfahren gemeinsam ist die Steuerung des Molekulargewichts der Polyaryletherketone durch eine geeignete Verfahrensführung. Die Begrenzung des Molekulargewichts erfolgt entweder durch Zusatz einer unter den Reaktionsbedingungen monofunktionellen Komponente oder durch Einsatz eines Überschusses einer Monomerkomponente. Als besonders günstig erweist sich nach DE-A 2650943 die Kombination eines elektrophilen und eines nucleophilen Abschlußmittels, wobei der zweifache Kettenabschluß Polyaryletherketone mit erhöhter Schmelzestabilität liefert. Entsprechend dem Stand der Technik werden als elektrophile Abschlußmittel bevorzugt Arylcarbonsäurehalogenide oder Arylsulfonsäurehalogenide oder Derivate davon eingesetzt. Geeignete Abschlußmittel für diesen Zweck werden detailliert in US 4709007 und DE-A 2650943 beschrieben.

Bei einem Endgruppenverschluß durch Arylcarbonsäurehalogenide oder Arylsulfonsäurehalogenide bzw. deren Derivate oder durch einen Überschuß der elektronenreichen Monomerkomponente ist eine weitere Funktionalisierung am Kettenende erschwert bzw. nicht mehr möglich. In vielen Fällen ist es jedoch wünschenswert, Möglichkeiten für weitere Umsetzungen bzw. Funktionalisierungen am Kettenende zu haben.

In der DE- A 39 06 178 wird ein Verfahren zur Herstellung von Polyaryletherketonen beschrieben, gemäß welchem vor oder während der elektrophilen Polykondensation eine Verbindung zugesetzt wird, die Carbonsäuren in ihre Halogenide überführt; beispielhaft wird Thionylchlorid als geeignete Verbindung genannt.

Aufgabe der vorliegenden Erfindung war es daher, ein Verfahren zur Herstellung von hochmolekularen, teilkristallinen Polyaryletherketonen durch elektrophile Polykondensation zur Verfügung zu stellen, in dem die Einstellung des Molekulargewichts einfach und genau kontrolliert werden kann und daneben weitere Umsetzungen bzw. Funktionalisierungen am Kettenende in einfacher Weise möglich sind.

Diese Aufgabe wird erfindungsgemäß gelöst durch ein Verfahren zur Herstellung von Polyaryletherketonen durch elektrophile Polykondensation unter Verwendung von Carbonsäurehalogeniden als Monomerbestandteil in Gegenwart einer Lewis-Säure als Katalysator, wobei die Umsetzung bei einem Druck im Bereich von 300 bis 5000 kPa, vorzugsweise von 500 bis 3000 kPa und insbesondere von 1000 bis 2000 kPa und in Anwesenheit von Oxiden des Schwefels und/oder Halogenderivaten von Oxiden des Schwefels durchgeführt wird.

Oxide des Schwefels werden dabei gegenüber deren Halogenderivaten bevorzugt, insbesondere hat sich Schwefeldioxid als besonders geeignet erwiesen. Daneben ist als bevorzugte Halogenverbindung Thionylchlorid zu nennen.

Die Polykondensation wird dabei derart durchgeführt, daß vor oder während der elektrophilen Polykondensation Schwefeloxide oder Halogenderivate von Oxiden des Schwefels in einer Menge von 30, vorzugsweise 0,1 bis 30 Mol.-% und insbesondere 0,2 bis 15 Mol.-%., bezogen auf die Summe der Mengen an eingesetzten Monomeren, zugesetzt werden.

Das Molekulargewicht der nach dem erfindungsgemäßen Verfahren hergestellten Polyaryletherketone kann über die Menge an Schwefeloxiden oder Schwefelhalogenoxiden einfach und genau kontrolliert werden. Die inhärente Viskosität einer 0.5 proz. Lösung des Polymeren in konzentrierter Schwefelsäure als Maß für das Molekulargewicht kann im allgemeinen im Bereich von 0.16 bis 3.0 dl/g kontrolliert werden.

Neben dem elektrophilen Abschlußmittel, welches vorstehend beschrieben wurde, kann weiterhin auch ein nucleophiles Abschlußmittel in Kombination mit den Schwefeloxiden oder Schwefelhalogenoxiden eingesetzt werden.

Nach dem erfindungsgemäßen Verfahren kann in einfacher Weise durch geeignete Wahl der Stöchiometrie von elektrophilem Abschlußmittel (Oxide des Schwefels und/oder deren Halogenderivate), bezogen auf die Menge an Monomeren das Zahlenmittel des Molekulargewichts eingestellt und vorausberechnet werden.

Das Zahlenmittel des Molekulargewichts ergibt sich nach der Formel

$$M_n = (C) \times W/(T)$$

wobei

| | | |
|---|---|---|
| (C) = (EE) = (NN) | = | molare Konzentration an nukleophilem bzw. elektrophilem Monomer |
| W | | Molekulargewicht der wiederkehrenden Einheit und |
| (T) | | die molare Konzentration an elektrophilem Abschlußmittel ist. |

Durchgeführte Versuchsreihen zeigten eine sehr gute Übereinstimmung des nach obiger Formel berechneten Zahlenmittel des Molekulargewichts mit dem entsprechenden Wert, wie er durch Elemantaranalyse bestimmt wurde. Die nachfolgende Tabelle verdeutlicht dies:

| Beispiel-Nr. | $\eta_{inh}$ in dl/g[1)] | $M_n$ in g/mol[2)] elementaranalytisch | $M_n$ in g/mol[3)] eingestellt |
|---|---|---|---|
| 1 | 0,76 | 8785 | 8561 |
| 2 | 0,54 | 7446 | 7235 |
| 3 | 0,16 | 836 | 496 |
| 4 | 0,38 | 5390 | 5267 |
| 5 | 0,50 | 8349 | 8493 |

1) inhärente Viskosität in konz. $H_2SO_4$ bei 25°C, 0,4g/100 ml
2) $M_n$ bestimmt über Elementaranalyse aus dem Verhältnis C/S
3) $M_n$ berechnet aus Formel (1)

Die nach dem erfindungsgemäßen Verfahren erhältlichen endgruppenfunktionalisierten Polyaryletherketone sind wertvolle Zwischenstufen für weitere Umsetzungen. Durch Umsetzung an den funktionellen Endgruppen sind eine große Menge von Blockcopolymeren erhältlich. Durch Ankopplung von in verschiedenster Weise detektierbaren anorganischen oder organischen Molekülen bzw. Ionen sind tracermodifizierte Polyaryletherketone zugänglich. Durch Salzbildung erhält man Nucleierungsmittel.

Das beanspruchte Verfahren eignet sich zur Herstellung von Polyaryletherketonen mit beliebigen wiederkehrenden Einheiten, d.h. prinzipiell allen Polymeren, in deren Hauptkette aromatische Struktureinheiten im wesentlichen durch -CO- oder -O- Brücken miteinander verknüpft sind. Neben diesen Verknüpfungsarten können in kleineren Anteilen auch andere verknüpfende Einheiten vorhanden sein.

Erfindungsgemäß geeignete Einheiten der allgemeinen Formel I haben vorzugsweise die Struktur

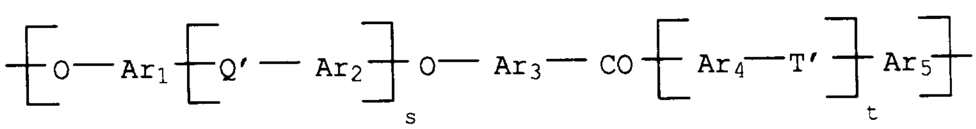

(I)

wobei s und t jeweils den Wert 0, 1, 2 oder 3 haben und Q' und T' jeweils -O- oder -CO- sein können. $Ar_1$, $Ar_2$, $Ar_3$, $Ar_4$, und $Ar_5$ sind jeweils unabhängig voneinander eine m-Phenylen-, p-Phenylen, Biphenylen- oder Naphtylengruppe oder ein $C_1$-$C_{12}$-Alkyl-, $C_1$-$C_6$-Alkoxy-, Aryl-, Chlor- oder Fluorderivat einer solchen Gruppe. Bevorzugt werden Einheiten, in denen Q' und T' -CO- sind und s und t den Wert 1 haben.

Auch die geeigneten elektronenreichen Aromaten sind dem Fachmann bekannt und in der genannten Literatur beschrieben, weshalb hier wegen näherer Einzelheiten auf die dort gemachten Ausführungen verweisen wird. Besonders bevorzugte Verbindungen sind 4,4'-Diphenoxybenzophenon, Diphenylether, 1,4-Diphenoxybenzol und 1,4-Bis-(4-phenoxybenzoyl)benzol, um nur vier Vertreter zu nennen.

Die Polykondensation erfolgt in Anwesenheit einer Lewis-Säure vorzugsweise in einem inerten Lösungsmittel.

Die Lewis-Säure wird dabei in einem Überschuß bezogen auf die molare Menge an eingesetzten Carbonylgruppen und Säurehalogenidgruppen eingesetzt, wobei der Überschuß ausreichend sein muß, um die Reaktion zu katalysieren. Im allgemeinen reicht ein molarer Überschuß von 2 bis 80 Mol.-% Lewis-Säure, vorzugsweise von 5 bis 30 Mol.-% Lewis-Säure, bezogen auf die molare Menge an eingesetzten Carbonylgruppen und Säurehalogenidgruppen für diesen Zweck aus.

Sind in den Monomeren beispielsweise basische Gruppen, wie z.B. Sulfongruppen vorhanden, so bezieht der Überschuß an Lewis-Säure sich vorteilhaft auf die Menge an eingesetzten Carbonylgruppen, Säurehalogenidgruppen und weiteren basischen Gruppen.

Mit dem Begriff Lewis-Säuren sind für die vorliegende Erfindung grundsätzlich alle Verbindungen, die ein einsames Elektronenpaar von einer Verbindung koordinieren können, gemeint. Beispielhaft seien hier $SbCl_5$, $Sb_2F_5$, $AlCl_3$, $AlBr_3$, $InCl_3$, $GaCl_3$, $BCl_3$, $ZnCl_2$, $FeCl_3$, $SnCl_4$, $TiCl_4$, und $MoCl_5$ genannt, wobei insbesondere wasserfreies $AlCl_3$ bevorzugt wird.

Gemäß einer bevorzugten Ausführungsform des Verfahrens wird die Polykondensation in Gegenwart von 0.01 bis 4 Äquivalenten, vorzugsweise 0.05 bis 2 Äquivalenten, einer Lewis-Base bezogen auf ein Äquivalent Säurehalogenidgruppen durchgeführt. Die Lewisbase steuert in gewissem Maße die Reaktion und unterdrückt unerwünschte Nebenreaktionen, wie z.B. die ortho-Substitution an den elektronenreichen Aryloxyaromaten. Für diesen Zweck geeignete Lewis-Basen werden detailliert in WO 84/03 891 beschrieben. Beispielhaft seien Amide, Amine, Ester, Ether, Ketone, Nitrile, Nitroverbindungen, Phosphine, Phosphinoxide, Sulfide, Sulfone, Sulfonamide und Sulfoxide genannt, wobei darauf geachtet werden muß, daß die Lewis-Base weder acylierend, alkylierend oder arylierend wirkt, noch selbst acyliert, alkyliert oder aryliert wird.

Bevorzugte Lewis-Basen sind N-Methylformamid, N,N-Dimethylformamid, N,N-Dimethylacetamid, 1-Methyl-2-pyrrolidon, Aceton, Benzophenon und Alkalimetallchloride.

Die Umsetzung wird, wie bereits erwähnt, vorzugsweise in einem inerten Lösungsmittel durchgeführt. Als inerte Lösungsmittel werden bevorzugt polare Lösungsmittel eingesetzt, deren Dielektrizitätskonstante mindestens 2.5, vorzugsweise 4.0 bis 25 (bei 25oC), beträgt. Beispielhaft seien hier Methylenchlorid, Schwefelkohlenstoff, 1,2-Dichlorethan, 1,1,2,2-Tetrachlorethan und 1,2-Dichlorbenzol sowie deren Mischungen genannt.

Die Temperatur, bei der die Reaktion durchgeführt wird, liegt im allgemeinen im Bereich zwischen -60 bis 150°C, vorzugsweise im Bereich von -30 bis 50°C.

Es ist vorteilhaft, alle Lösungsmittel und Monomere wasserfrei einzusetzen.

Nach erfolgter Polykondensation und Abtrennung evtl. noch vorhandener Schwefeloxide bzw. Halogenverbindungen des Schwefeldioxids und des Chlorwasserstoffs arbeitet man die Reaktionsmasse in der Regel nach bekannten und in der Literatur beschriebenen Verfahren auf. Vorzugsweise wird hierzu eine Lewis-Base zugegeben, deren Komplexbildungskonstante zu der Lewissäure größer ist als die Komplexbildungskonstante der Carbonylgruppen des Polymers zu der Lewissäure und die daher aus dem Lewis-Säure-Polymer-Komplex das Polymer freisetzt. Beispiele für solche Lewis-Basen finden sich in der bereits erwähnten WO 84/03891. Bevorzugt werden Wasser und Methanol oder deren Mischungen verwendet. Nach dieser Dekomplexierung und gegebenenfalls Zerkleinerung des Produkts kann dieses zur Reinigung noch mit einem geeigneten Lösungsmittel extrahiert werden.

Schwefeldioxid wird dabei als analytisch leicht bestimmbare Endgruppe in die Polymere eingebaut. Mit Hilfe der Elementaranalyse konnten bei allen in Gegenwart von $SO_2$ synthetisierten Polyaryletherketonen unterschiedliche Mengen an Schwefel in den Polymeren nachgewiesen werden, wobei sich aus dem Verhältnis von Kohlenstoff zu Schwefel das mittlere Molekulargewicht $M_n$ der Polymere bestimmen läßt.

Für den Fall, daß ohne Monomerüberschuß und nur mit einem elektrophilen Abschlußmittel polykondensiert wird, sei hier beispielhaft die molekulargewichtsregulierende Wirkung von $SO_2$ und $SOCl_2$ erläutert.

Abbildung 1 zeigt die graphische Auftragung der inhärenten Viskosität einer Lösung von 0.4 g Polymer in 10 ml konzentrierter Schwefelsäure bei 25oC gegen das durch Endgruppenbestimmung (Elementaranalyse) ermittelte Mole-

kulargewicht $M_n$.

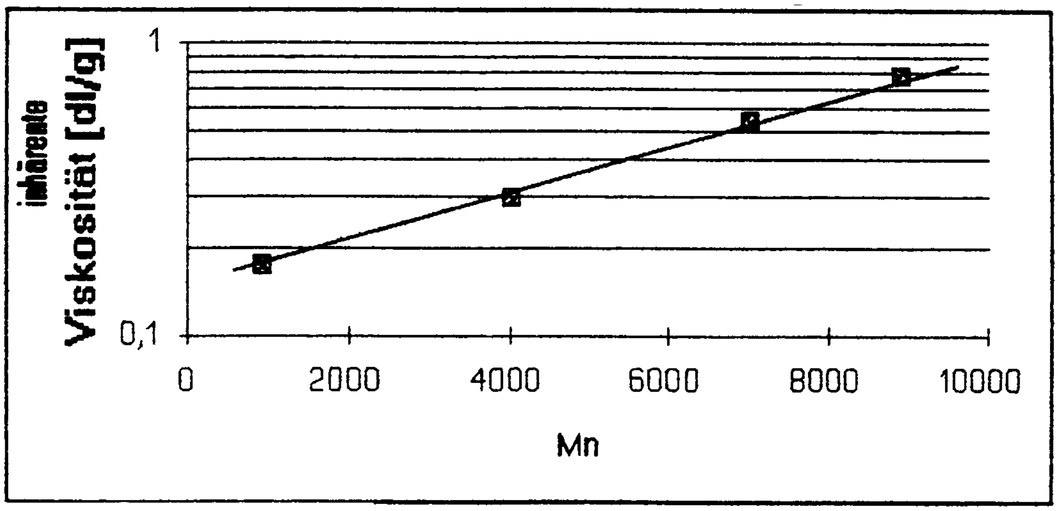


Abb. 1 graphische Auftragung der inhäranten Viskosität gegen das Molekulargewicht $M_n$ bestimmt durch Elementaranalyse

Nach dem erfindungsgemäßen Verfahren ist eine einfache Steuerung bzw. Einstellung des Molekulargewichts der gewünschten Produkte möglich. Darüber hinaus können die nach dem erfindungsgemäßen Verfahren hergestellten Produkte aufgrund ihrer Endgruppenfunktionalisierung gut für weitere Umsetzungen eingesetzt werden.

Beispiele

Beispiel 1
(Molekulargewichtsregelung mit $SO_2$ unter Verwendung von Dimethylsulfon als Lewis-Base)

Ein 1 l Glasautoklav mit Rührwerk, Druckvorratsgefäß (75 ml) und Gaseinleitungsrohr, wurde dreimal evakuiert und mit Stickstoff gefüllt. Bei -60°C wurden nacheinander 147.335 g (1.105 mol) Aluminiumtrichlorid und 28.239 g (0.150 Mol) Dimethylsulfon in 180 ml Methylenchlorid suspendiert und 15 Minuten bei dieser Temperatur gerührt (900 U/min). Zu der Katalysatorsuspension wurden bei -50oC nacheinander 40.605 g (0.200 mol) Terephthalsäuredichlorid und 73.140 g (0.200 mol) 4,4'-Diphenoxybenzophenon eingewogen. Die zum Einwiegen verwendeten Geräte wurden mit insgesamt 20 ml getrocknetem Methylenchlorid nachgespült. Das Druckvorratsgefäß (75 ml) mit Gaseinleitungsrohr wurde mit 0.7423 g (0.0116 mol) Schwefeldioxid beaufschlagt, mit dem Autoklaven verschraubt und die ganze Apparatur anschließend verschlossen. Bei -50°C wurde das in dem Druckvorratsgefäß enthaltene Schwefeldioxid dem Reaktionsgemisch zugeführt. Unter kräftigem Rühren (900 U/min) wurde die Reaktionstemperatur innerhalb von 30 Minuten auf 0°C erhöht, wobei das Reaktionsgemisch nach 90 Minuten erstarrte. Anschließend wurde zur Vervollständigung der Polykondensation auf 20°C erwärmt und das Reaktionsgemisch 3 Stunden bei dieser Temperatur gehalten. Nach insgesamt 5 Stunden Reaktionszeit wurde das Reaktionsprodukt mechanisch aus dem Kolben entfernt. Die so erhaltene zähe Masse wurde in einem Haushaltsmixer zerkleinert. In einem 10 l-Gefäß mit Ultra-Turrax (Typ T50) wurden 3 l entionisiertes Wasser auf 10°C abgekühlt und der zerkleinerte Polymer-Katalysator-Komplex innerhalb von 10 Minuten eingetragen. Die vollständige Dekomplexierung des Polymeren erfolgte innerhalb von 15 Minuten, wobei die Temperatur 22°C am Ende der Reaktion erreichte. Zur Entfernung von Methylenchlorid wurde abfiltriert und im Luftstrom 30 Minuten getrocknet. Die Extraktion erfolgte kontinuierlich in einem 2 l Planschliffkolben mit KPG-Rührer, Wasserzulauf und Filtrationseinheit. Mit entionisiertem Wasser wurden die ca. 0.5 mm großen Polymerflocken 8 Stunden bei 60oC mit einer Flußrate von 15 l/h extrahiert. Die Prüfung auf Chloridionen im Filtrat erfolgte mit Silbernitratlösung, wobei nach 4 Stunden kein Chlorid mehr nachweisbar war. Das Polymer wurde abfiltriert und 12 Stunden bei 100°C im Luftstrom vorgetrocknet. Anschließend wurde noch 8 Stunden bei 110°C (20 Torr) getrocknet. Es wurde ein Polymer der inhärenten Viskosität 0.760 dl/g ( 1-proz. Lösung des Polymeren in 96 proz. Schwefelsäure bei 25°C) in einer Ausbeute von 81 g

( entsprechend 81 % der Theorie) erhalten. Für das erhaltene Polymer wurde ein Kohlenstoffgehalt von 78.75 % und ein Schwefelgehalt von 0.36 % in der Elementaranalyse gefunden.

Beispiel 2
(Molekulargewichtsregelung mit $SO_2$ unter Verwendung von Dimethylsulfon als Lewis-Base)

Beispiel 1 wurde wiederholt, es wurden jedoch 0.8784 g (0.0137 mol) Schwefeldioxid zur Molekulargewichtsregelung eingesetzt. Es wurde ein Polymer der inhärenten Viskosität 0.544 dl/g (1 proz. Lösung des Polymeren in 96 proz. Schwefelsäure bei 25°C) in einer Ausbeute von 81 g (entsprechend 81 % der Theorie) erhalten. Für das erhaltene Polymer wurde ein Kohlenstoffgehalt von 79.73 % und ein Schwefelgehalt von 0.43 % in der Elementaranalyse gefunden.

Beispiel 3
(Molekulargewichtsregelung mit $SO_2$ ohne Verwendung einer Lewis-Base)

Beispiel 1 wurde ohne Dimethylsulfonzugabe wiederholt, es wurden jedoch 19.217 g (0.300 Mol) Schwefeldioxid zur Molekulargewichtsregelung eingesetzt. Es wurde ein Polymer der inhärenten Viskosität 0.158 dl/g (1 proz. Lösung des Polymeren in 96 proz. Schwefelsäure bei 25°C) in einer Ausbeute von 85 g ( entsprechend 85 % der Theorie) erhalten. Für das erhaltene Polymer wurde ein Kohlenstoffgehalt von 73.47 % und ein Schwefelgehalt von 3.53 % in der Elementaranalyse gefunden.

Die Beispiele Nr. 4 und Nr. 5 zeigen beispielhaft die Molekulargewichtsregelung durch Zugabe von $SOCl_2$ als elektrophilem Abschlußreagenz.

Beispiel 4
(Molekulargewichtsregelung mit $SOCl_2$ unter Verwendung von Dimethylsulfon als Lewis-Base)

Beispiel 1 wurde wiederholt, es wurden jedoch 2.2406 g (0.01883 mol) Thionylchlorid zur Molekulargewichtsregelung eingesetzt. Es wurde ein Polymer der inhärenten Viskosität 0,383 dl/g (1 proz. Lösung des Polymeren in 96 proz. Schwefelsäure bei 25°C) in einer Ausbeute von 78 g (entsprechend 78 % der Theorie) erhalten. Für das erhaltene Polymer wurde ein Kohlenstoffgehalt von 77.84 % und ein Schwefelgehalt von 0.58 % in der Elementaranalyse gefunden.

Beispiel 5
(Molekulargewichtsregelung mit $SOCl_2$ unter Verwendung von Dimethylsulfon als Lewis-Base)

Beispiel 1 wurde wiederholt, es wurden jedoch 1.3896 g (0.0117 Mol) Thionylchlorid zur Molekulargewichtsregelung eingesetzt. Es wurde ein Polymer der inhärenten Viskosität 0.501 dl/g (1 proz. Lösung des Polymeren in 96 proz. Schwefelsäure bei 25°C) in einer Ausbeute von 86 g (entsprechend 86 % der Theorie) erhalten. Für das erhaltene Polymer wurde ein Kohlenstoffgehalt von 79.00 % und ein Schwefelgehalt von 0.38 % in der Elementaranalyse gefunden.

Beispiel 6
(keine Molekulargewichtsregelung)

Beispiel 1 wurde wiederholt, es wurde jedoch keine molekulargewichtsregelnde Verbindung eingesetzt. Es wurde ein Polymer der inhärenten Viskosität 2.505 dl/g ( 1 proz. Lösung des Polymeren in 96 proz. Schwefelsäure bei 25°C) in einer Ausbeute von 99 g (entsprechend 99 % der Theorie) erhalten.

**Patentansprüche**

1. Verfahren zur Herstellung von Polyaryletherketonen durch elektrophile Polykondensation unter Verwendung von Carbonsäurehalogeniden als Monomerbestandteil in Gegenwart einer Lewis Säure, dadurch gekennzeichnet, daß man die Umsetzung bei Drucken im Bereich von 300 bis 5000 kPa in Anwesenheit von Oxiden des Schwefels und/oder Halogenderivaten von Oxiden des Schwefels durchführt.

2. Verfahren nach Anspruch 1, dadurch gekennzeichnet, daß man die Oxide des Schwefels und/oder deren Halogenderivate in einer Menge von 0,1 bis 30 Mol.-%, bezogen auf die Mengen an eingesetzten Monomeren, verwendet.

3. Verfahren zur Steuerung des Molekulargewichts bei der Herstellung von Polyaryletherketonen durch elektrophile Polykondensation unter Verwendung von Carbonsäurehalogeniden als Monomerbestandteil in Gegenwart von Lewis-Katalysatoren, dadurch gekennzeichnet, daß zur Steuerung des Molekulargewichts 5 bis 75 Mol.-%, bezogen

auf die Gesamtmenge an eingesetzten Monomeren, Oxide des Schwefels und/oder Halogenderivate von Oxiden des Schwefels eingesetzt werden.

Europäisches Patentamt

# EUROPÄISCHER RECHERCHENBERICHT

Nummer der Anmeldung: EP 95 11 0214

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | US-A-4 247 682 (DAHL KLAUS J) 27.Januar 1981<br>* Anspruch 1; Beispiel 5 *<br>--- | 1-3 | C08G61/12 |
| X | US-A-3 914 298 (DAHL KLAUS J) 21.Oktober 1975<br>* Anspruch 1; Beispiel 6 *<br>--- | 1-3 | |
| A | US-A-4 963 616 (JENEKHE SAMSON A) 16.Oktober 1990<br>* Anspruch 1; Beispiele 21-26 *<br>----- | | |

RECHERCHIERTE SACHGEBIETE (Int.Cl.6): C08G

Der vorliegende Recherchenbericht wurde für alle Patentansprüche erstellt

| Recherchenort | Abschlußdatum der Recherche | Prüfer |
|---|---|---|
| DEN HAAG | 12.Oktober 1995 | Stienon, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)